# EUROPÄISCHE PATENTANMELDUNG

(11) **EP 1 084 869 A2**
(43) Veröffentlichungstag der Anmeldung: **21.03.2001**
(21) Anmeldenummer: 00118706.1
(22) Anmeldetag: 30.08.2000
(51) Int. Cl.: B60B 27/02

(54) **Nabe für ein Laufrad**

(30) Priorität: 16.09.1999 DE 29916339 U
(71) Anmelder: Golz, Günter, 33449 Langenberg (DE)
(72) Erfinder: Golz, Günter, 33449 Langenberg (DE)
(74) Vertreter: Patentanwälte Rehberg + Hüppe

(57) **Zusammenfassung**

Eine Nabe (1) für ein Laufrad, insbesondere ein Laufrad eines Rollstuhls, weist einen gespritzten Nabenkörper (2) aus Kunststoff, der eine beidendig mit je einer Stufe (6, 7) versehene axiale Durchbrechung (4) aufweist, und Flansche zur Verankerung der Speichenköpfe der Speichen auf. Der Nabenkörper (2) weist im Bereich seiner Durchbrechung (4) eine sich zwischen den Stufen (6, 7) erstreckende Buchse (5) auf. Die innere Oberfläche der Buchse (5) der axialen Durchbrechung (4) ist als über den Umfang geschlossene Gleitfläche (18) ausgebildet.

## Beschreibung

Die Erfindung betrifft eine Nabe für ein Laufrad, insbesondere ein Laufrad eines Rollstuhls, mit einem gespritzten Nabenkörper aus Kunststoff, der eine beidendig mit je einer Stufe versehene axiale Durchbrechung aufweist, und mit Flanschen zur Verankerung der Speichenköpfe der Speichen. Laufräder der hier in Rede stehenden Art setzen sich üblicherweise aus einer Nabe, aus einer Feige und entsprechenden Speichen zusammen. Die Naben bestehen aus Metall, d. h. es handelt sich um meist durch Drehen hergestellte metallene Formkörper, die einen rohrartigen Grundkörper aufweisen, an dessen beiden Enden je ein Flansch vorgesehen ist. Der Flansch ist mit Löchern versehen, durch die die Speichenköpfe der Speichen geführt sind. Die meisten Naben bestehen aus Metall, insbesondere Aluminium oder Stahl. Sie sind mit einer Kugellagerung versehen. Auf jeder Seite bzw. an jedem Ende der Nabe ist ein Kugellager untergebracht.

Es ist aber auch bereits eine Nabe der eingangs beschriebenen Art bekannt, die sich im wesentlichen von den sonstigen Naben dadurch unterscheidet, daß sie einen gespritzten Nabenkörper aus Kunststoff aufweist. Der Nabenkörper ist also in einer Form durch Spritzen des Kunststoffs hergestellt. Der Nabenkörper besitzt eine axiale Durchbrechung, die an beiden Enden unter Bildung einer Stufe aufgeweitet ist. Diese beiden Stufen dienen zur Aufnahme je eines Kugellagers. Die Innenringe der beiden Kugellager werden auf einer Achse festgelegt, die an einer gabel- oder flanschförmigen Konstruktion festgespannt ist. Bei Rollstühlen ist es auch üblich, Steckachsen zu verwenden, die eine leichte Montage und Demontage des Laufrades von den übrigen Elementen des Rollstuhls ermöglicht. Statt Steckachsen können auch Befestigungsschrauben eingesetzt werden. Bei dieser bekannten Nabe besteht lediglich der Grundkörper des Nabenkörpers aus Kunststoff, während die zur Verankerung der Speichenköpfe der Speichen vorgesehenen und notwendigen Flansche als Metallscheiben ausgebildet sind. Zwischen den Metallscheiben und dem Grundkörper der Nabe ist eine formschlüssige Verbindung vorgesehen. Zu diesem Zweck weist der Grundkörper der Nabe an beiden Enden sich radial um ein gewisses Maß nach außen erstreckende Vorsprünge auf, die in entsprechende Ausnehmungen an den Metallscheiben eingreifen. Die axiale Durchbrechung zwischen den beiden Stufen wird von einer Anzahl von sich radial erstreckenden Rippen gebildet, die nach innen, also in Richtung auf die axiale Durchbrechung, frei enden. Die Rippen sind dabei zur Gewichtsreduzierung eingesetzt. Sie ermöglichen es, den Grundkörper der Nabe mit einer im wesentlichen über die axiale Länge konstanten Wandstärke auszubilden. Die bekannte Nabe setzt eine Kugellagerung voraus, ist also dazu bestimmt, in Verbindung mit zwei Kugellagern verwendet zu werden. Auf der Außenseite des Laufrades findet zusätzlich ein eingepreßter Ring aus Stahl Verwendung, der also auf der Seite angeordnet ist, an der sich auch an einem Rollstuhl der Greifring befindet. Die bekannte Nabe setzt eine relativ große Anzahl von Teilen ein. Sie ist aufwendig aufgebaut und besitzt einen recht großen und daher auffälligen Außendurchmesser im Bereich der Flansche. Die Flansche selbst aus Stahlscheiben müssen sorgfältig hergestellt werden, wobei es darauf ankommt, die Ränder und Kanten sorgfältig zu entgraten und abzurunden, damit die Gefahr der Beschädigung der Speichen vermindert ist.

Der Erfindung liegt die Aufgabe zugrunde, eine Universal-Nabe zu schaffen, die bei einfachem Aufbau wahlweise eine Lagerung des Laufrades mit einem Gleitlager oder in Verbindung mit zwei Kugellagern zuläßt.

Erfindungsgemäß wird dies bei einer Nabe der eingangs beschriebenen Art dadurch erreicht, daß der Nabenkörper im Bereich seiner Durchbrechung eine sich zwischen den Stufen erstreckende Buchse aufweist, und daß die innere Oberfläche der Buchse der axialen Durchbrechung als über den Umfang geschlossene Gleitfläche ausgebildet ist.

Die Erfindung geht von dem Gedanken aus, den Grundkörper der Nabe besser als bisher zu nutzen und so auszubilden, daß er wahlweise für eine Gleitlagerung einerseits und eine Kugellagerung andererseits herangezogen werden kann. Zur preisgünstigen Herstellung des Nabenkörpers wird dieser aus Kunststoff gespritzt. Der aus Kunststoff gespritzte Grundkörper des Nabenkörpers enthält die axiale Durchbrechung mit den an beiden Enden vorgesehenen, im Durchmesser erweiterten Stufen. Diese Stufen dienen in erster Linie dazu, je ein Kugellager unterzubringen. Bei der neuen Nabe wird jedoch der Zwischenraum der axialen Durchbrechung zwischen den beiden Stufen für die Realisierung des Gleitlagers genutzt. Es ist hier eine Buchse vorgesehen bzw. gebildet, die einstückig mit dem Grundkörper ausgebildet ist. Die innere Oberfläche der Buchse ist als über den Umfang geschlossene Gleitfläche vorgesehen. Die innere Oberfläche der axialen Durchbrechung des Grundkörpers zwischen den Stufen arbeitet mit einer Gleithülse aus Metall zusammen, so daß zwischen den beiden einander zugekehrten Flächen eine Gleitpaarung gebildet wird. Dies ist freilich nur dann der Fall, wenn die Gleitlagerung verwirklicht wird. Bei Realisierung einer Kugellagerung kommt der inneren Oberfläche der Buchse eine untergeordnete Bedeutung zu. Sie dient nur dem Hindurchstecken einer Achse, einer Distanzbuchse o. dgl.. Die neue Universal-Nabe weist den wesentlichen Vorteil auf, daß sie in großen Stückzahlen preiswert herstellbar ist und mit weiteren Elementen jeweils verbaut werden kann, so daß damit eine große Breite von Anwendungsfällen abgedeckt werden kann. Die neue Nabe ist für Laufräder bestimmt, insbesondere für die Laufräder von Rollstühlen. Sie kann aber auch für sonstige Laufräder eingesetzt werden, beispielsweise an Kinderwagen o. dgl.. Die neue Nabe besitzt ein äußerst geringes Gewicht. Sie weist ein dekoratives Gepräge auf. Der zum Spritzen der Nabe vorgesehene Kunststoff kann wahlweise in verschiedenen Farben eingefärbt werden, beispielsweise abgestimmt auf die Greifringhalter, wie sie an Rollstühlen eingesetzt werden. Damit ergibt sich ein hervorstechendes Design an solchen Laufrädern. Die neue Nabe ermöglicht kurze Montagezeiten durch ihre universelle Verwendbarkeit. Der Laufradhersteller wird dadurch in die Lage versetzt, jederzeit für den jeweiligen Anwendungsfahl liefern zu können.

Jeder Flansch kann in einen Flanschteil aus Kunststoff und einen Flanschteil aus Metall, insbesondere Stahl, unterteilt sein, wobei die beiden Flanschteile sich deckende Löcher für die Verankerung der Speichenköpfe der Speichen aufweisen. Die Unterteilung der Flanschteile in einen ersten Flanschteil aus Kunststoff und einen weiteren Flanschteil aus Metall ist besonders wichtig. Die Flanschteile aus Metall gestatten eine einwandfreie Verankerung der Speichenköpfe der Speichen, ohne daß eine Ausreißgefahr besteht. Durch die sich deckenden Löcher der beiden Flanschteile, durch die die Speichen jeweils hindurchgeführt werden, werden die beiden Flanschteile formschlüssig miteinander verbunden, ohne daß eine besondere konstruktive Ausbildung nötig wäre. Insbesondere kann der Flanschteil aus Kunststoff einstückig mit dem Nabenkörper ausgebildet sein. Diese Ausführungsform ist besonders vorteilhaft, weil durch die einstückige Ausbildung der Flanschteil aus Kunststoff mit dem Grundkörper des Nabenkörpers formschlüssig verbunden ist und sich so gesonderte Maßnahmen hierfür erübrigen. Gleichzeitig ist es ohne weiteres möglich, die Löcher in dem Flanschteil aus Kunststoff bezüglich der beiden Seiten um eine halbe Teilung versetzt anzuordnen, so daß die Speichen den Löchern in der Feige zugeordnet sind und übereinstimmende Flanschteile aus Metall an beiden Enden der Nabe eingesetzt werden können, freilich ebenfalls um eine halbe Teilung gegeneinander versetzt.

Es ist aber auch möglich, daß der Flanschteil aus Kunststoff als zum Nabenkörper separates Teil ausgebildet ist, der mit dem Nabenkörper formschlüssig verbunden ist. In diesem Falle sind an jeder Seite je eine formschlüssige Verbindung zwischen den Teilen aus Kunststoff erforderlich. Andererseits wird die Spritzform für den Grundkörper des Nabenkörpers einfacher.

Wenn der Flanschteil aus Kunststoff einen größeren Außendurchmesser als der Flanschteil aus Metall aufweist, ergeben sich verschiedene in technischer wie auch in dekorativer Hinsicht vorteilhafte Möglichkeiten. Der Flanschteil aus Metall besitzt in der Regel ein anderes Aussehen als der Flanschteil aus Kunststoff. Die beiden Teile umgeben einander ringförmig, so daß das Aussehen der Nabe in montiertem Zustand verbessert ist. In technischer Hinsicht kann der überstehende Rand des Flanschteils aus Kunststoff zum Schutze der Speichen ausgebildet und eingesetzt werden. Insbesondere kann der Flanschteil aus Kunststoff auf seiner Außenseite eine sich axial und radial erstreckende Vertiefung zur versenkten Aufnahme des Flanschteils aus Metall aufweisen. Damit wird der Flanschteil aus Metall geschützt untergebracht. Es entfällt eine aufwendige Bearbeitung, insbesondere Entgratung des Formteils aus Metall. Zwischen dem Flanschteil aus Kunststoff und dem Flanschteil aus Metall kann eine Preßpassung verwirklicht werden, damit die vormontierten Naben während des Einfädelns der Speichen nicht auseinanderfallen können. Weiterhin ist es möglich, daß der Flanschteil aus Kunststoff und der Flanschteil aus Metall mit einer Montagehilfe versehen sind. Eine solche Montagehilfe besteht aus einem oder mehreren Vorsprüngen im einen Teil und Vertiefungen im anderen Teil, die an sich einen Formschluß bilden können, der jedoch nur während der Montage genutzt wird. Es ist auch möglich, die Montagehilfe in Form von Markierungen an den Teilen auszubilden. Die Markierungen können an dem Grundkörper bzw. den beiden Flanschteilen aus Kunststoff mit angespritzt werden, wobei auch hier die Markierungen bzw. Montagehilfen auf beiden Seiten um eine halbe Teilung gegeneinander versetzt angeordnet sind.

Besonders sinnvoll ist es, wenn die Vertiefung in dem Flanschteil aus Kunststoff und der Flanschteil aus Metall entsprechend der Anordnung der Speichen geneigt ausgebildet sind. Die hierbei verwendete bzw. eingesetzte Neigung entspricht der üblichen Neigung der Speichen an einem Laufrad gegenüber der Achse des Laufrades. Die Neigung kann in der Größenordnung von 10° liegen. Damit ist sichergestellt, daß der Flanschteil aus Kunststoff von Biegekräften freigehalten wird. Die von den Speichen übertragenen Kräfte werden von den Flanschteilen aus Metall aufgenommen. Die Flanschteile aus Metall legen sich axial gegen die Flanschteile aus Kunststoff, so daß eine Überbeanspruchung der empfindlichen Kunststoffteile vermieden ist.

Die Buchse kann als Rohrabschnitt ausgebildet sein, die über sich radial und axial erstreckende Rippen mit den anderen Bereichen des Nabenkörpers verbunden ist. Dies dient der Gewichtsreduzierung und der reproduzierbaren Herstellung fehlerfreier Naben. Es ist aber auch möglich, auf die gesonderte Anordnung von Rippen zu verzichten, so daß der Grundkörper direkt in den Bereich der Buchse mit der axialen Durchbrechung durchgeht.

Zur Ausbildung einer Kugellagerung ist eine Distanzbuchse vorgesehen, die die Buchse mit Spiel durchsetzt. Die Distanzbuchse wird bei der Montage des Laufrades an den Innenringen der beiden Kugellager festgespannt. Das Spiel zwischen Distanzbuchse und der inneren Oberfläche der axialen Durchbrechung ist erforderlich, um die Bewegung an dieser Stelle zuzulassen.

Zur Ausbildung einer Gleitlagerung ist eine Gleithülse vorgesehen, die einen sich an der einen Stufe anlegenden Bund aufweist und mit der inneren Oberfläche der Buchse eine Gleitpaarung bildet. Die Universal-Nabe wird mit dem einen oder anderen Teil kombiniert, so daß wahlweise eine Kugellagerung oder eine Gleitlagerung verwirklicht werden kann.

Die Erfindung wird anhand bevorzugter Ausführungsbeispiele weiter erläutert und beschrieben. Es zeigen:
- Fig. 1: einen Schnitt durch eine erste Ausführungsform der Nabe,
- Fig. 2: eine Detaildarstellung der Nabe im Bereich eines Flansches,
- Fig. 3: eine Draufsicht auf einen Flanschteil aus Metall,
- Fig. 4: eine Draufsicht auf die eine Seite der Nabe,
- Fig. 5: eine Draufsicht auf die andere Seite der Nabe,
- Fig. 6: eine Schnittdarstellung unter Verwendung der Nabe gemäß den Fig. 1 bis 5 zur Realisierung einer Kugellagerung,
- Fig. 7: die Darstellung einer Gleithülse und
- Fig. 8: einen Schnitt durch die Nabe gemäß Fig. 1 bis 5 bei Ausbildung einer Gleitlagerung.

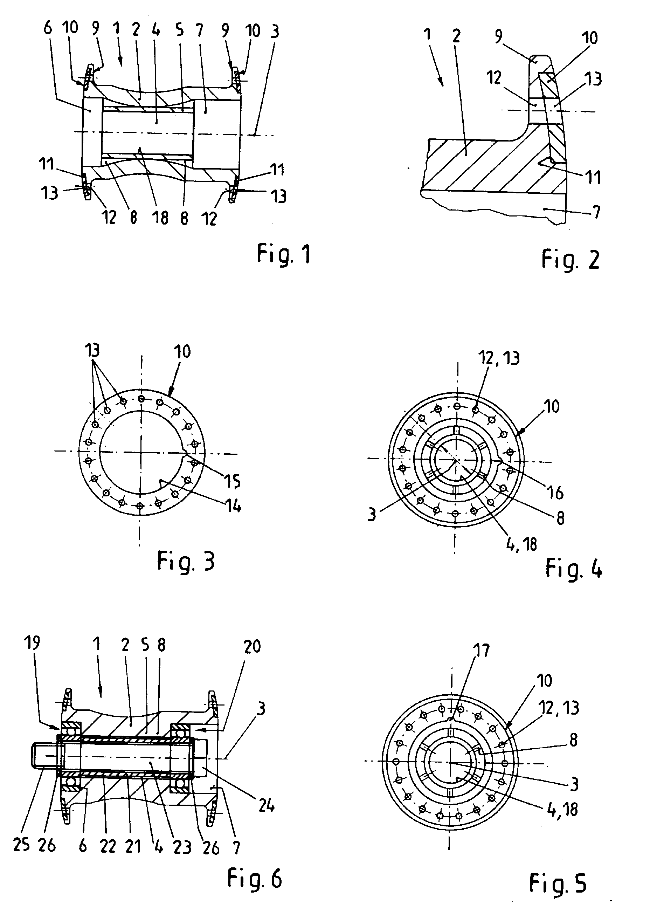

In Fig. 1 ist in einem Achsschnitt eine Nabe 1 dargestellt, die einen Nabenkörper 2 besitzt, der in etwa eine rohrabschnittartige Gestalt aufweist. Der Nabenkörper ist in wesentlichen Bereichen rotationssymmetrisch zu einer Achse 3 ausgebildet. Er weist eine sich axial erstreckende Durchbrechung 4 auf. Die Durchbrechung 4 wird von einer Buchse 5 gebildet, die sich im wesentlichen im Mittelbereich des Nabenkörpers 2 erstreckt. Die Buchse 5 bzw. die axiale Durchbrechung 4 geht an beiden Enden in je eine Stufe 6 und 7 über. Die Stufen 6 und 7 besitzen einen größeren Durchmesser als die Buchse 5. Die Stufe 7, die der Außenseite des Laufrades zugeordnet ist, weist eine größere axiale Tiefe als die Stufe 6 auf. Die Buchse 5 ist mit dem Nabenkörper 2 über sich radial erstreckende Rippen 8 verbunden bzw. von solchen Rippen 8 gehalten. Der Nabenkörper 2, die Rippen 8 und die Buchse 5 ist als einstückiger Formkörper aus Kunststoff im Formspritzverfahren hergestellt. Statt der Anordnung der Rippen 8 könnte der Nabenkörper 2 an dieser Stelle auch eine vergrößerte Wandstärke aufweisen, so daß die Buchse 5 unmittelbar in den Nabenkörper 2 übergeht.

An beiden Enden geht der Nabenkörper 2 in je ein Flanschteil 9 aus Kunststoff über. Die Flanschteile 9 aus Kunststoff weisen den größten axialen Außendurchmesser der Nabe 1 auf und stehen in radialer Richtung von der Achse 3 ab. Zu der Nabe 1 gehören noch zwei Flanschteile 10 aus Metall, insbesondere aus Stahl. Ein solches Flanschteil 10 ist in Einzeldarstellung in Fig. 3 gezeigt. Zur versenkten Aufnahme je eines Flanschteils 10 aus Metall an je einem Flanschteil 9 aus Kunststoff sind sich axial und radial entsprechend der zeichnerischen Darstellung erstreckende Vertiefungen 11 vorgesehen, die außen an der Nabe beginnen und sich in Richtung auf den Mittelbereich des Nabenkörpers erstrecken. Aus Fig. 1 ist bereits erkennbar, daß die Vertiefungen 11 und die Flanschteile 10 aus Metall zur Achse 3 der Nabe 1 geneigt angeordnet sind, wie es dem Verlauf der nicht dargestellten Speichen entspricht. Die Flanschteile 9 aus Kunststoff und die Flanschteile 10 aus Metall sind mit sich deckenden Löchern 12 und 13 versehen.

Wie Fig. 3 erkennen läßt, sind die beiden an einem Nabenkörper 2 eingesetzten Flanschteile 10 aus Metall identisch ausgebildet. Der Flanschteil 10 besitzt die Gestalt einer Ringscheibe. Er weist in der Mitte eine Öffnung 14 auf, die eine kleine radial sich erstreckende Ausnehmung 15 besitzt, die als Montagehilfe dient. Zu der Ausnehmung 15 gehört ein Noppen 16 auf der einen Seite des Nabenkörpers 2 sowie ein Noppen 17 auf der anderen Seite des Nabenkörpers 2. Die beiden Noppen 16 und 17 sind um eine halbe Teilung gegeneinander versetzt angeordnet. Im vorliegenden Falle läßt ein Vergleich der Fig. 4 und 5 erkennen, daß die beiden Noppen 16 und 17 an den beiden Flanschteilen 9 des Nabenkörpers 2 um 90° gegeneinander versetzt angeordnet sind, so daß die Löcher 12, 13 auf beiden Seiten der Nabe 1 gegeneinander um eine halbe Teilung versetzt angeordnet sind, wie es der Anordnung der Speichen relativ zur Felge entspricht. Die nicht dargestellten Speichen erstrecken sich mit ihren Speichenköpfen durch jeweils zwei sich deckende Löcher 12 und 13 der Flanschteile 9 und 10, so daß die Flanschteile 9, 10 durch die 18 Speichen jeder Seite formschlüssig miteinander verbunden sind. Die Flanschteile 10 sind in den Vertiefungen 11 der Flanschteile 9 geschützt untergebracht. Es kann hier eine Schnappverbindung oder ein Preßsitz vorgesehen sein, um die Teile aneinander zu halten.

Während die Stufen 6 und 7 zur Aufnahme von Kugellagern bestimmt sind, bildet die innere Oberfläche der Buchse 5 eine Gleitfläche 18, wenn eine Gleitlagerung verwirklicht wird.

Fig. 6 zeigt den Einsatz der Nabe 1 gemäß den Fig. 1 bis 5 bei Realisierung einer Kugellagerung. In der Stufe 6 ist ein erstes Kugellager 19 und in der Stufe 7 ein zweites Kugellager 20 untergebracht. Die beiden Kugellager 19 und 20 können von identischer Ausbildung sein. Die Schnittdarstellung in Fig. 6 zeigt einen Schnitt, der gegenüber der Darstellung der Fig. 1 um 90° versetzt ist. Demzufolge gehen die Rippen 8 direkt in die Buchse 5 über. Zusätzlich zu den beiden Kugellagern 19 und 20 wird eine Distanzbuchse 21 eingesetzt, die sich in verspanntem Zustand gegen die Innenringe der beiden Kugellager 19 und 20 legt. Die Distanzbuchse 21 durchsetzt die Buchse 5 mit Spiel 22. Die Gleitfläche 18 der Buchse 5 ist hier ohne Funktion. Zur Montage des Laufrades an dem betreffenden Fahrzeug, beispielsweise dem Rollstuhl, kann eine Befestigungsschraube 23 eingesetzt werden, die an ihrem einen Ende einen Kopf 24 aufweist, während das andere Ende mit Gewinde 25 versehen ist, welches in ein Flanschgewinde am Rollstuhl eingreifen kann. Bei der Montage werden noch zwei Distanzscheiben 26 eingesetzt. Man erkennt, daß der Kopf 24 der Befestigungsschraube 23 ebenfalls in der Stufe 7 untergebracht ist. Zu diesem Zweck besitzt die Stufe 7 eine größere axiale Tiefe als die Stufe 6. Die zeichnerische Darstellung gibt die Teile etwa halb so groß wie die natürliche Ausbildung wieder. Es versteht sich, daß die Befestigungsschraube 23 auch durch eine Steckachse ersetzt sein könnte, wobei dann die fahrzeugseitige Aufnahme etwas anders ausgebildet ist.

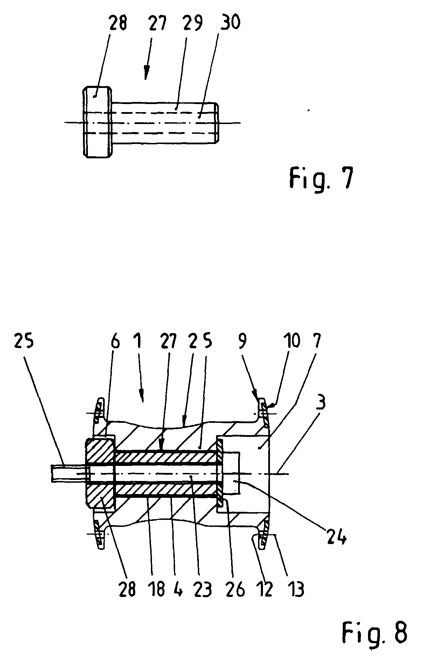

Die in den Fig. 1 bis 5 wiedergegebene Nabe 1 läßt sich aber auch zur Realisierung einer Gleitlagerung einsetzen. Als weiteres Teil wird eine Gleithülse 26 benötigt, die in Fig. 7 in Einzeldarstellung verdeutlicht ist. Die Gleithülse 27 besitzt einen Bund 28 und einen Schaft 29. Die Gleithülse 27 wird gänzlich von einer Bohrung 30 durchsetzt, die sich also durch den Schaft 29 und den Bund 28 hindurcherstreckt. Die Bohrung 30 kann mit dem Innendurchmesser der Distanzbuchse 21 (Fig. 6) übereinstimmen, so daß in beiden Fällen eine Befestigungsschraube 23, eine Steckachse o. dgl. eingesetzt werden kann. Die Gleitfläche 18 der Buchse 5 und die äußere Oberfläche der Gleithülse 27 bilden hierbei die Gleitpaarung. Die Gleithülse 27 wird hier mit einer Distanzscheibe 26 verbaut. Der Kopf 28 der Gleithülse 27 besitzt eine etwas größere Tiefe als die Stufe 6.

### BEZUGSZEICHENLISTE

- 1 -: Nabe
- 2 -: Nabenkörper
- 3 -: Achse
- 4 -: Durchbrechung
- 5 -: Buchse
- 6 -: Stufe
- 7 -: Stufe
- 8 -: Rippe
- 9 -: Flanschteil
- 10 -: Flanschteil
- 21 -: Distanzbuchse
- 22 -: Spiel
- 23 -: Befestigungsschraube
- 24 -: Kopf
- 25 -: Gewinde
- 26 -: Distanzscheibe
- 27 -: Gleithülse
- 28 -: Bund
- 29 -: Schaft
- 30 -: Bohrung
- 11 -: Vertiefung
- 12 -: Loch
- 13 -: Loch
- 14 -: Öffnung
- 15 -: Ausnehmung
- 16 -: Noppen
- 17 -: Noppen
- 18 -: Gleitfläche
- 19 -: Kugellager
- 20 -: Kugellager

## Patentansprüche

1. Nabe (1) für ein Laufrad, insbesondere ein Laufrad eines Rollstuhls, mit einem gespritzten Nabenkörper (2) aus Kunststoff, der eine beidendig mit je einer Stufe (6, 7) versehene axiale Durchbrechung (4) aufweist, und mit Flanschen zur Verankerung der Speichenköpfe der Speichen, **dadurch gekennzeichnet,** daß der Nabenkörper (2) im Bereich seiner Durchbrechung (4) eine sich zwischen den Stufen (6, 7) erstreckende Buchse (5) aufweist, und daß die innere Oberfläche der Buchse (5) der axialen Durchbrechung (4) als über den Umfang geschlossene Gleitfläche (18) ausgebildet ist.

2. Nabe nach Anspruch 1, **dadurch gekennzeichnet,** daß jeder Flansch in einen Flanschteil (9) aus Kunststoff und einen Flanschteil (10) aus Metall, insbesondere Stahl, unterteilt ist, und daß die beiden Flanschteile (9, 10) sich deckende Löcher (12, 13) für die Verankerung der Speichenköpfe der Speichen aufweisen.

3. Nabe nach Anspruch 2, **dadurch gekennzeichnet,** daß der Flanschteil (9) aus Kunststoff einstückig mit dem Nabenkörper (2) ausgebildet ist.

4. Nabe nach Anspruch 2, **dadurch gekennzeichnet,** daß der Flanschteil (9) aus Kunststoff als zum Nabenkörper (2) separates Teil ausgebildet ist, der mit dem Nabenkörper (2) formschlüssig verbunden ist.

5. Nabe nach einem der Ansprüche 1 bis 4, **dadurch gekennzeichnet,** daß der Flanschteil (9) aus Kunststoff einen größeren Außendurchmesser als der Flanschteil (10) aus Metall aufweist.

6. Nabe nach einem der Ansprüche 1 bis 5, **dadurch gekennzeichnet,** daß der Flanschteil (9) aus Kunststoff auf seiner Außenseite eine sich axial und radial erstreckende Vertiefung (11) zur versenkten Aufnahme des Flanschteils (10) aus Metall aufweist.

7. Nabe nach einem der Ansprüche 1 bis 6, **dadurch gekennzeichnet,** daß der Flanschteil (9) aus Kunststoff und der Flanschteil (10) aus Metall mit einer Montagehilfe (15, 16, 17) versehen sind.

8. Nabe nach Anspruch 6, **dadurch gekennzeichnet,** daß die Vertiefung (11) in dem Flanschteil (9) aus Kunststoff und der Flanschteil (10) aus Metall entsprechend der Anordnung der Speichen geneigt ausgebildet sind.

9. Nabe nach Anspruch 1, **dadurch gekennzeichnet,** daß die Buchse (5) als Rohrabschnitt ausgebildet ist, die über sich radial und axial erstreckende Rippen (8) mit den anderen Bereichen des Nabenkörpers (2) verbunden ist.

10. Nabe nach einem der Ansprüche 1 bis 9, **dadurch gekennzeichnet,** daß zur Ausbildung einer Kugellagerung eine Distanzbuchse (21) vorgesehen ist, die die Buchse (5) mit Spiel durchsetzt.
